# EUROPÄISCHE PATENTANMELDUNG

(11) **EP 2 873 881 A1**
(43) Veröffentlichungstag der Anmeldung: **20.05.2015**
(21) Anmeldenummer: 14192489.4
(22) Anmeldetag: 10.11.2014
(51) Int. Cl.: F16C 29/00, F24C 15/16, A47B 88/10, F16C 29/04, A47L 15/50, A47B 88/14

(54) **Auszugsführung für ein Gerät**

(30) Priorität: 13.11.2013 DE 102013019006
(71) Anmelder: Laag S.r.l., 39040 Montagna (IT)
(72) Erfinder: Meurer, Gerold, 39040 Margreid (BZ) (IT)
(74) Vertreter: Zinnecker, Armin

(57) **Zusammenfassung**

Eine Auszugsführung für ein Gerät oder ein Möbel umfasst eine Führungsschiene (21), eine Zwischenschiene (22), eine Laufschiene (23), eine erste Kugelbahn (26) in der Führungsschiene, eine zweite Kugelbahn (27) in der Zwischenschiene auf der der Führungsschiene zugewandten Seite, eine dritte Kugelbahn (28) in der Zwischenschiene auf der der Laufschiene zugewandten Seite und eine vierte Kugelbahn (29) in der Laufschiene. Um eine derartige Auszugsführung zu verbessern, weist die erste Kugelbahn auf der der Auszugsseite der Zwischenschiene abgewandten Seite weniger Kugeln (20) auf als auf der der Auszugsseite der Zwischenschiene zugewandten Seite.

## Beschreibung

Die Erfindung betrifft eine Auszugsführung für ein Gerät oder ein Möbel oder einen sonstigen Gegenstand. Bei dem Gerät kann es sich insbesondere um ein Elektrogerät handeln, beispielsweise um einen Kühlschrank, einen Herd oder einen Backofen.

Die Auszugsführung umfasst eine Führungsschiene, eine Zwischenschiene und eine Laufschiene. Die Führungsschiene kann an dem Gehäuse des Geräts oder an dem Korpus des Möbels befestigt werden. Die Laufschiene kann an einem beweglichen Teil des Geräts oder des Möbels befestigt werden, insbesondere an einer Schublade. Es ist allerdings auch möglich, dass die Laufschiene mit einem Teil des Geräts oder des Möbels fest oder lösbar verbunden wird, beispielsweise mit einem Backblech, das auf die Laufschiene aufgelegt werden kann.

Die Auszugsführung umfasst ferner eine erste Kugelbahn, die sich in der Führungsschiene befindet, eine zweite Kugelbahn, die sich in der Zwischenschiene auf der der Führungsschiene zugewandten Seite befindet, eine dritte Kugelbahn, die sich in der Zwischenschiene auf der der Laufschiene zugewandten Seite befindet, und eine vierte Kugelbahn, die sich in der Laufschiene befindet. Jede Kugelbahn kann eine oder mehrere, insbesondere zwei, Kugelreihen umfassen. Die Kugelreihe oder die Kugelreihen befinden sich ihrerseits in einem Kugelkäfig.

Die Kugelbahnen bilden Kugelführungen zwischen der Führungsschiene und der Zwischenschiene und zwischen der Zwischenschiene und der Laufschiene. Anstelle von Kugeln können auch andere Wälzkörper verwendet werden. Unter Kugeln im Sinne der Erfindung werden also auch anders geformte Wälzkörper verstanden, insbesondere zylinderförmige Wälzkörper.

Die erste Kugelbahn stützt sich an der Führungsschiene und an der Zwischenschiene ab. Die zweite Kugelbahn stützt sich an der Zwischenschiene und an der Führungsschiene ab. Die dritte Kugelbahn stützt sich an der Zwischenschiene und an der Laufschiene ab. Die vierte Kugelbahn stützt sich an der Laufschiene und an der Zwischenschiene ab.

Durch die Kugelführungen müssen Kräfte übertragen werden. Diese Kräfte können als äußere Kräfte über die Laufschiene eingeleitet werden. Bei den äußeren Kräften kann es sich insbesondere um Gewichtskräfte handeln. Wenn sich beispielsweise auf der Laufschiene ein Gargutträger wie insbesondere ein Backblech befindet, wird eine nach unten wirkende Gewichtskraft auf die Laufschiene ausgeübt. Diese Gewichtskraft kann durch das Gargut noch vergrößert werden.

Bei eingefahrenen Schienen werden diese Gewichtskräfte durch die Kugelbahnen übertragen. Hier wirken keine oder nur geringe Hebelarme auf die Schienen.

Wenn die Zwischenschiene und die Laufschiene ausgefahren sind, erzeugen dieselben Gewichtskräfte aufgrund der größeren Hebelarme eine wesentlich größere Belastung. Durch die Hebelarme werden Kippmomente erzeugt.

Bei vorbekannten Lösungen bestehen die Kugelreihe oder die Kugelreihen der Kugelbahnen aus einer bestimmten Anzahl von Kugeln, die jeweils einen gleichen Abstand voneinander aufweisen und die gleichmäßig über die Länge der Schienen verteilt sind. Bei ausgezogener Zwischenschiene und Laufschiene werden diese Kugeln verschieden stark belastet.

Aufgabe der Erfindung ist es, die Belastung der Kugeln der Kugelbahnen zu optimieren.

Nach einem ersten Vorschlag wird diese Aufgabe durch die Merkmale des Anspruchs 1 gelöst. Danach weist die erste Kugelbahn auf der der Auszugsseite der Zwischenschiene abgewandten Seite weniger Kugeln auf als auf der der Auszugsseite der Zwischenschiene zugewandten Seite. Die Belastung der ersten Kugelbahn ist bei ausgezogener Zwischenschiene auf der der Auszugsseite der Zwischenschiene zugewandten Seite größer, so dass dort mehr Kugeln vorgesehen sind. Auf der der Auszugsseite der Zwischenschiene abgewandten Seite ist die Belastung geringer, so dass dort weniger Kugeln vorgesehen sind. Die Gesamtzahl der Kugeln der ersten Kugelbahn wird bei gleicher Tragkraft verkleinert.

Nach einem zweiten Vorschlag wird die der Erfindung zugrundeliegende Aufgabe durch die Merkmale des Anspruchs 2 gelöst. Die zweite Kugelbahn weist auf der der Auszugsseite der Zwischenschiene zugewandten Seite weniger Kugeln auf als auf der der Auszugsseite der Zwischenschiene abgewandten Seite. Die Anzahl der Kugeln ist auf der Seite mit der höheren Belastung größer und auf der Seite mit der geringeren Belastung geringer, so dass die Gesamtzahl der Kugeln der zweiten Kugelbahn bei gleicher Tragkraft verkleinert wird.

Nach einem dritten Vorschlag wird die der Erfindung zugrundeliegende Aufgabe durch die Merkmale des Anspruchs 3 gelöst. Die dritte Kugelbahn weist auf der der Auszugsseite der Laufschiene zugewandten Seite weniger Kugeln auf als auf der der Auszugsseite der Laufschiene abgewandten Seite. Die Anzahl der Kugeln ist auf der höher belasteten Seite größer als auf der weniger belasteten Seite, so dass die Gesamtzahl der Kugeln der dritten Kugelbahn unter Aufrechterhaltung der gesamten Tragkraft geringer ist.

Nach einem vierten Vorschlag wird die der Erfindung zugrundeliegende Aufgabe durch die Merkmale des Anspruchs 4 gelöst. Die vierte Kugelbahn weist auf der der Auszugsseite der Laufschiene abgewandten Seite weniger Kugeln auf als auf der der Auszugsseite der Laufschiene zugewandten Seite. Die Anzahl der Kugeln ist auf der höher belasteten Seite größer als auf der weniger belasteten Seite. Unter Aufrechterhaltung der Tragkraft kann dadurch die Gesamtzahl der Kugeln der vierten Kugelbahn verringert werden.

Die erfindungsgemäßen Lösungen können miteinander kombiniert werden.

Die Erfindung kann ferner auch dann realisiert werden, wenn keine Zwischenschiene vorhanden ist, wenn die Auszugsführung also eine Führungsschiene und eine Laufschiene umfasst. Die erste Kugelbahn weist auf der der Auszugsseite der Laufschiene zugewandten Seite weniger Kugeln auf als auf der der Auszugsseite der Laufschiene abgewandten Seite. Stattdessen oder zusätzlich weist die zweite Kugelbahn auf der der Auszugsseite der Laufschiene abgewandten Seite weniger Kugeln auf als auf der der Auszugsseite der Laufschiene zugewandten Seite.

Eine oder mehrere oder alle Kugelbahnen können jeweils eine oder mehrere, vorzugsweise zwei, Kugelreihen umfassen.

Die Kugelreihen einer oder mehrerer oder aller Kugelbahnen können in einer C-Anordnung und/oder in einer Y-Anordnung und/oder in einer X-Anordnung angeordnet sein.

Eine vorteilhafte Weiterbildung der Erfindung ist dadurch gekennzeichnet, dass die Kugelreihe oder die Kugelreihen der ersten Kugelbahn und/oder der zweiten Kugelbahn und/oder der dritten Kugelbahn und/oder der vierten Kugelbahn auf der Seite, auf der sie weniger Kugeln aufweisen, nur eine Kugel aufweisen.

Eine weitere vorteilhafte Weiterbildung der Erfindung ist dadurch gekennzeichnet, dass die Auszugsführung anstelle von Kugeln andere Wälzkörper aufweist. Die Auszugsführung kann anstelle von Kugeln insbesondere zylinderförmige Wälzkörper aufweisen.

Die Erfindung betrifft ferner ein Gerät oder ein Möbel, das durch eine oder mehrere erfindungsgemäße Auszugsführungen gekennzeichnet ist.

Ein Ausführungsbeispiel der Erfindung wird nachstehend anhand der beigefügten Zeichnung im Einzelnen erläutert. In der Zeichnung zeigt
- Fig. 1: eine Auszugsführung nach dem Stand der Technik in der eingefahrenen Stellung in einer schematischen Seitenansicht,
- Fig. 2: die Auszugsführung gemäß Fig. 1 in der ausgezogenen Stellung,
- Fig. 3: eine erfindungsgemäße Auszugsführung in der eingefahrenen Stellung in einer schematischen Seitenansicht,
- Fig. 4: die Auszugsführung gemäß Fig. 3 in der ausgezogenen Stellung,
- Fig. 5: eine weitere erfindungsgemäße Auszugsführung in der eingefahrenen Stellung in einer schematischen Seitenansicht,
- Fig. 6: die Auszugsführung gemäß Fig. 5 in der ausgezogenen Stellung,
- Fig. 7: eine Auszugsführung der in Fig. 1 bis 4 gezeigten Art mit Kugelreihen in Y-Anordnung in einem Querschnitt,
- Fig. 8: eine Auszugsführung der in Fig. 5 und 6 gezeigten Art mit Kugelreihen in C-Anordnung in einem Querschnitt und
- Fig. 9: eine Auszugsführung der in Fig. 1 bis 4 gezeigten Art mit Kugelreihen in X-Anordnung.

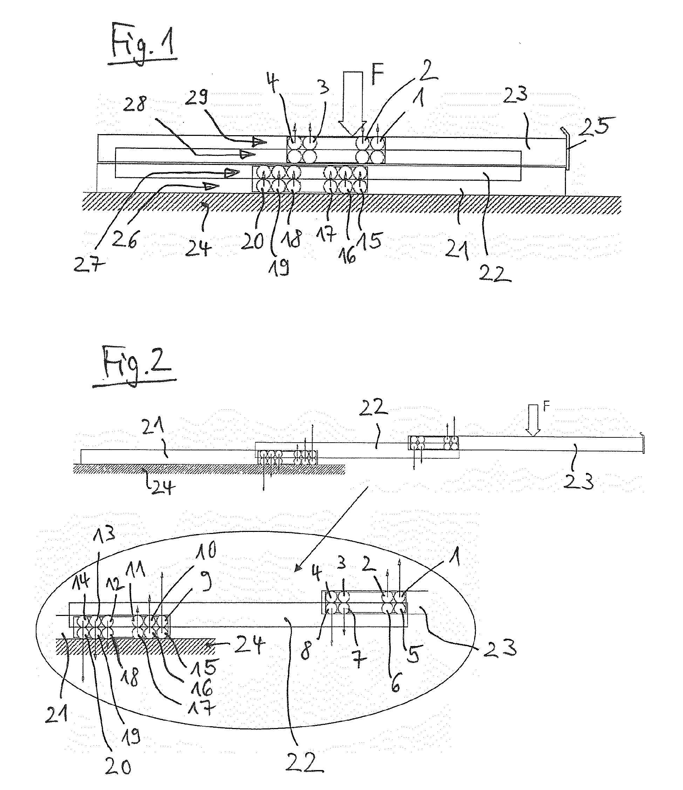

Die in Fig. 1 und 2 dargestellte Auszugsführung für ein Gerät umfasst eine Führungsschiene 21, eine Zwischenschiene 22 und eine Laufschiene 23. Die Führungsschiene 21 ist an dem Gehäuse 24 eines Geräts oder an dem Korpus eines Möbels befestigt. Auf die Laufschiene 23 kann ein Gargutträger wie beispielsweise ein Backblech aufgelegt werden. Die Laufschiene 23 kann allerdings auch mit einer Schublade eines Möbels verbunden sein. Im Ausführungsbeispiel weist die Laufschiene 23 an ihrem vorderen, der Führungsschiene 21 abgewandten Ende eine Abdeckung 25 auf.

Die Auszugsführung umfasst eine erste Kugelbahn 26 in der Führungsschiene 21, eine zweite Kugelbahn 27 in der Zwischenschiene 22 auf der der Führungsschiene 21 zugewandten Seite, eine dritte Kugelbahn 28 in der Zwischenschiene 22 auf der der Laufschiene 23 zugewandten Seite und eine vierte Kugelbahn 29 in der Laufschiene 23. Die Kugelbahnen 26, 27, 28, 29 umfassen jeweils eine Kugelreihe.

Wenn sich die Auszugsführung in der in Fig. 1 gezeigten eingefahrenen Stellung befindet, wird die äußere Kraft F von den Kugeln der Kugelbahnen 26-29 aufgenommen. Die äußere Kraft F ist eine Gewichtskraft, die vertikal nach unten gerichtet ist. Die Kugeln der Kugelbahnen werden gleichmäßig belastet. Da keine oder nur sehr geringe Kippmomente auftreten sind die auf die Kugeln wirkenden Kräfte verhältnismäßig gering. In diesem Belastungsfall könnte die Anzahl der Kugeln ohne Einbußen der Tragfähigkeit verringert werden.

Wenn hingegen die Auszugsführung ausgefahren wird, entstehen durch die äußere Kraft F, die auf die Laufschiene 23 in vertikaler Richtung nach unten wirkt, wie in Fig. 2 gezeigt, verhältnismäßig große Kippmomente, wodurch die Belastung der Kugeln erhöht wird. Um das Kippmoment der herauskragenden Laufschiene abzustützen wirken hohe Kräfte auf die Kugeln ein.

Dabei ist allerdings die Verteilung dieser Kräfte auf die einzelnen Kugeln der Kugelführungen sehr unterschiedlich. Wie aus Fig. 2 ersichtlich werden die inneren Kugeln 12, 13, 14 der zweiten Kugelbahn 27, die sich auf der der Zwischenschiene 22 abgewandten Seite befinden, umso höher belastet, je weiter diese Kugeln innen liegen. Die außen liegenden Kugeln 15, 16, 17 der ersten Kugelbahn 26, die sich auf der der Zwischenschiene 22 zugewandten Seite befinden, werden umso höher belastet, je weiter diese Kugeln außen liegen.

Die inneren Kugeln 7, 8 der dritten Kugelbahn 28, die sich auf der der Laufschiene 23 abgewandten Seite befinden, werden umso höher belastet, je weiter diese Kugeln innen liegen. Die außen liegenden Kugeln 1, 2 der vierten Kugelbahn 29, die sich auf der der Laufschiene 23 zugewandten Seite befinden, werden umso höher belastet, je weiter diese Kugeln außen liegen.

In Fig. 2 werden also die Kugeln 15, 14, 8, 1 jeweils am stärksten belastet. Die Kugeln 16, 17, 13, 12, 7, 2 werden geringer belastet.

Die weiteren Kugeln, also die inneren Kugeln 18, 19, 20 der ersten Kugelbahn 26, die äußeren Kugeln 9, 10, 11 der zweiten Kugelbahn 27, die äußeren Kugeln 5, 6 der dritten Kugelbahn 28 und die inneren Kugeln 3, 4 der vierten Kugelbahn 29 werden noch weniger belastet.

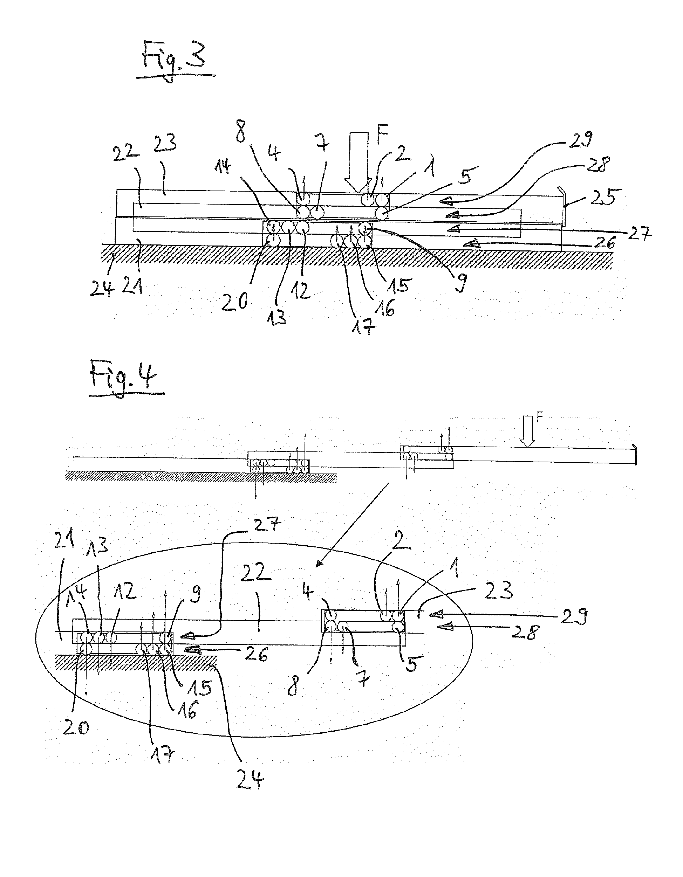

Hier setzt die Erfindung, die in Fig. 3 und 4 gezeigt ist, an. Von den inneren Kugeln 18, 19, 20 der ersten Kugelbahn 26 können die äußeren Kugeln 18, 19 entfernt werden, so dass nur die innerste Kugel 20 verbleibt. Von den äußeren Kugeln 9, 10, 11 der zweiten Kugelbahn 27 können die inneren Kugeln 10, 11 weggelassen werden, so dass nur die äußerste Kugel 9 bleibt. Von den äußeren Kugeln 5, 6 der dritten Kugelbahn 28 kann die innere Kugel 6 entfernt werden, so dass nur die äußere Kugel 5 verbleibt, und von den inneren Kugeln 3, 4 der vierten Kugelbahn 29 wird die äußere Kugel 3 nicht benötigt, so dass lediglich die innere Kugel 4 verbleibt. Auf diese Weise können die Kugeln 18, 19, 10, 11, 6 und 3 eingespart werden. Diese Kugeln werden bei ausgezogener Auszugsführung zur Aufnahme der Kräfte, die durch die Kippmomente ausgelöst werden, nicht benötigt. Sie werden auch bei eingefahrener Auszugsführung nicht benötigt.

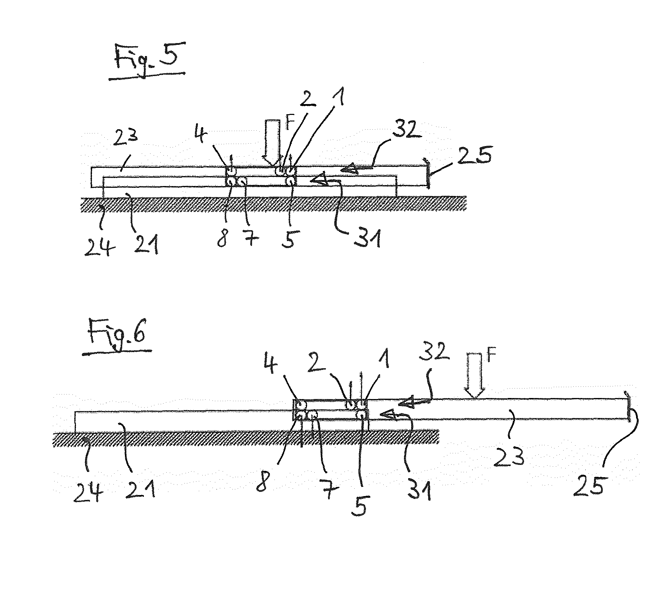

In den Fig. 5 und 6 ist eine weitere Ausführungsform gezeigt, bei der die Auszugsführung eine Führungsschiene und eine Laufschiene, jedoch keine Zwischenschiene umfasst. Bestandteile, die mit den Ausführungsformen nach Fig. 1 bis 4 übereinstimmen, sind mit denselben Bezugszeichen versehen und werden nicht erneut beschrieben.

Die Auszugsführung umfasst eine Führungsschiene 21, die an dem Gehäuse 24 eines Geräts oder an dem Korpus eines Möbels befestigt sein kann, und eine Laufschiene 23, auf die ein Gargutträger aufgelegt werden kann oder die mit einer Schublade eines Möbels verbunden sein kann. Die Auszugsführung umfasst ferner eine erste Kugelbahn 31 in der Führungsschiene 21 und eine zweite Kugelbahn 32 in der Laufschiene 23. Die Kugelbahnen 31, 32 umfassen jeweils eine Kugelreihe.

Die erste Kugelbahn 31 weist auf der der Auszugsseite der Laufschiene 23 zugewandten Seite nur eine Kugel 5 auf. Die zweite Kugelbahn 32 weist auf der der Auszugsseite der Laufschiene 23 abgewandten Seite nur eine Kugel 4 auf.

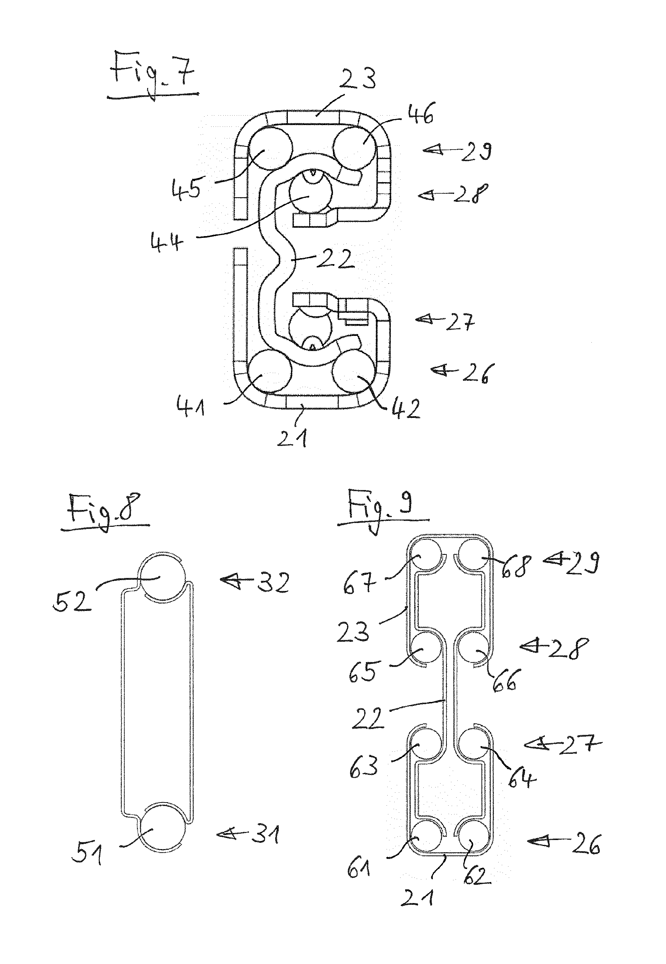

Fig. 7 zeigt eine Auszugsführung der in Fig. 1 bis 4 gezeigten Art in einem Querschnitt, bei der einander entsprechende Teile mit denselben Bezugszeichen beschrieben sind und nicht erneut erläutert werden. Hier umfasst die erste Kugelbahn 26 zwei Kugelreihen 41, 42. Die zweite Kugelbahn 27 umfasst eine Kugelreihe 43. Die dritte Kugelbahn 28 umfasst eine Kugelreihe 44. Die vierte Kugelbahn 29 umfasst zwei Kugelreihen 45, 46. Die Kugelreihen 41, 42, 43 der Kugelbahnen 26, 27 sind in Y-Anordnung angeordnet. Die Kugelreihen 44, 45, 46 der Kugelbahnen 28, 29 sind in Y-Anordnung angeordnet.

Fig. 8 zeigt eine Auszugsführung der in Fig. 5 und 6 gezeigten Art in einem Querschnitt. Hier umfasst die erste Kugelbahn 31 eine Kugelreihe 51. Die zweite Kugelbahn 32 umfasst ebenfalls eine Kugelreihe 52. Die Kugelreihen 51, 52 der Kugelbahnen 31, 32 sind in C-Anordnung angeordnet.

Fig. 9 zeigt eine Ausführungsform der in Fig. 1 bis 4 gezeigten Art in einem Querschnitt. Hier umfasst die erste Kugelbahn 26 zwei Kugelreihen 61, 62. Die zweite Kugelbahn 27 umfasst zwei Kugelreihen 63, 64. Die dritte Kugelbahn 28 umfasst zwei Kugelreihen 65, 66. Die vierte Kugelbahn 29 umfasst zwei Kugelreihen 67, 68. Die Kugelreihen 61, 62, 63, 64 der Kugelbahnen 26, 27 sind in X-Anordnung angeordnet. Die Kugelreihen 65, 66, 67, 68 der Kugelbahnen 28, 29 sind in X-Anordnung angeordnet.

Durch die Erfindung wird es ermöglicht, die Anzahl der Kugeln entsprechend der tatsächlich wirkenden Kräfte zu dimensionieren. Kugeln, die nur einer geringen Belastung ausgesetzt sind, werden herausgenommen.

Auch die Kugeln 20, 9, 5, 4 werden nur sehr gering belastet. Sie haben allerdings die Funktion, die zugehörigen Schienen zu führen. Hierfür ist es zweckmäßig oder erforderlich, zumindest eine Kugel beizubehalten. Diese zumindest eine Kugel an jedem Ende der Kugelbahnen kann auch als Anschlag dienen, um den jeweiligen Auszugsweg zu begrenzen. Im Endergebnis weist die erste Kugelbahn 26, die zweite Kugelbahn 27, die dritte Kugelbahn 28 und die vierte Kugelbahn 29 auf der Seite, auf der sie weniger Kugeln aufweist, nur eine Kugel 20, 9, 5, 4 auf.

## Patentansprüche

1. Auszugsführung für ein Gerät oder ein Möbel
mit einer Führungsschiene (21), einer Zwischenschiene (22), einer Laufschiene (23),
einer ersten Kugelbahn (26) in der Führungsschiene (21), einer zweiten Kugelbahn (27) in der Zwischenschiene (22) auf der der Führungsschiene (21) zugewandten Seite, einer dritten Kugelbahn (28) in der Zwischenschiene (22) auf der der Laufschiene (23) zugewandten Seite und einer vierten Kugelbahn (29) in der Laufschiene (23),
**dadurch gekennzeichnet,**
**dass** die erste Kugelbahn (26) auf der der Auszugsseite der Zwischenschiene (22) abgewandten Seite weniger Kugeln (20) aufweist als auf der der Auszugsseite der Zwischenschiene (22) zugewandten Seite.

2. Auszugsführung für ein Gerät oder ein Möbel
mit einer Führungsschiene (21), einer Zwischenschiene (22), einer Laufschiene (23),
einer ersten Kugelbahn (26) in der Führungsschiene (21), einer zweiten Kugelbahn (27) in der Zwischenschiene (22) auf der der Führungsschiene (21) zugewandten Seite, einer dritten Kugelbahn (28) in der Zwischenschiene (22) auf der der Laufschiene (23) zugewandten Seite und einer vierten Kugelbahn (29) in der Laufschiene (23),
**dadurch gekennzeichnet,**
**dass** die zweite Kugelbahn (27) auf der der Auszugsseite der Zwischenschiene (22) zugewandten Seite weniger Kugeln (9) aufweist als auf der der Auszugsseite der Zwischenschiene (22) abgewandten Seite.

3. Auszugsführung für ein Gerät oder ein Möbel
mit einer Führungsschiene (21), einer Zwischenschiene (22), einer Laufschiene (23),
einer ersten Kugelbahn (26) in der Führungsschiene (21), einer zweiten Kugelbahn (27) in der Zwischenschiene (22) auf der der Führungsschiene (21) zugewandten Seite, einer dritten Kugelbahn (28) in der Zwischenschiene (22) auf der der Laufschiene (23) zugewandten Seite und einer vierten Kugelbahn (29) in der Laufschiene (23),
**dadurch gekennzeichnet,**
**dass** die dritte Kugelbahn (28) auf der der Auszugsseite der Laufschiene (23) zugewandten Seite weniger Kugeln (5) aufweist als auf der der Auszugsseite der Laufschiene (23) abgewandten Seite.

4. Auszugsführung für ein Gerät oder ein Möbel
mit einer Führungsschiene (21), einer Zwischenschiene (22), einer Laufschiene (23),
einer ersten Kugelbahn (26) in der Führungsschiene (21), einer zweiten Kugelbahn (27) in der Zwischenschiene (22) auf der der Führungsschiene (21) zugewandten Seite, einer dritten Kugelbahn (28) in der Zwischenschiene (22) auf der der Laufschiene (23) zugewandten Seite und einer vierten Kugelbahn (29) in der Laufschiene (23),
**dadurch gekennzeichnet,**
**dass** die vierte Kugelbahn (29) auf der der Auszugsseite der Laufschiene (23) abgewandten Seite weniger Kugeln (4) aufweist als auf der der Auszugsseite der Laufschiene (23) abgewandten Seite.

5. Auszugsführung für ein Gerät oder ein Möbel
mit einer Führungsschiene (21), einer Zwischenschiene (22), einer Laufschiene (23),
einer ersten Kugelbahn (26) in der Führungsschiene (21), einer zweiten Kugelbahn (27) in der Zwischenschiene (22) auf der der Führungsschiene (21) zugewandten Seite, einer dritten Kugelbahn (28) in der Zwischenschiene (22) auf der der Laufschiene (23) zugewandten Seite und einer vierten Kugelbahn (29) in der Laufschiene (23),
**dadurch gekennzeichnet,**
**dass** die erste Kugelbahn (26) auf der der Auszugsseite der Zwischenschiene (22) abgewandten Seite weniger Kugeln (20) aufweist als auf der der Auszugsseite der Zwischenschiene (22) zugewandten Seite und/oder
**dass** die zweite Kugelbahn (27) auf der der Auszugsseite der Zwischenschiene (22) zugewandten Seite weniger Kugeln (9) aufweist als auf der der Auszugsseite der Zwischenschiene (22) abgewandten Seite und/oder
**dass** die dritte Kugelbahn (28) auf der der Auszugsseite der Laufschiene (23) zugewandten Seite weniger Kugeln (5) aufweist als auf der der Auszugsseite der Laufschiene (23) abgewandten Seite und/oder
**dass** die vierte Kugelbahn (29) auf der der Auszugsseite der Laufschiene (23) abgewandten Seite weniger Kugeln (4) aufweist als auf der der Auszugsseite der Laufschiene (23) abgewandten Seite.

6. Auszugsführung für ein Gerät oder ein Möbel
mit einer Führungsschiene (21), einer Laufschiene (23), einer ersten Kugelbahn (31) in der Führungsschiene (21) und einer zweiten Kugelbahn (32) in der Laufschiene (23),
**dadurch gekennzeichnet,**
**dass** die erste Kugelbahn (31) auf der der Auszugsseite der Laufschiene (23) zugewandten Seite weniger Kugeln (5) aufweist als auf der der Auszugsseite der Laufschiene (23) abgewandten Seite
und/oder dass die zweite Kugelbahn (32) auf der der Auszugsseite der Laufschiene (23) abgewandten Seite weniger Kugeln (4) aufweist als auf der der Auszugsseite der Laufschiene (23) zugewandten Seite.

7. Auszugsführung nach einem der vorhergehenden Ansprüche, **dadurch gekennzeichnet, dass** eine oder mehrere oder alle Kugelbahnen jeweils eine oder mehrere, vorzugsweise zwei, Kugelreihen umfassen.

8. Auszugsführung nach einem der vorhergehenden Ansprüche, **dadurch gekennzeichnet, dass** die Kugelreihen einer oder mehrerer oder aller Kugelbahnen in einer C-Anordnung und/oder in einer Y-Anordnung und/oder in einer X-Anordnung angeordnet sind.

9. Auszugsführung nach einem der vorhergehenden Ansprüche, **dadurch gekennzeichnet, dass** die Kugelreihe oder die Kugelreihen der ersten Kugelbahn (26) und/oder der zweiten Kugelbahn (27) und/oder der dritten Kugelbahn (28) und/oder der vierten Kugelbahn (29) auf der Seite, auf der sie weniger Kugeln aufweist, nur eine Kugel (20, 9, 5, 4) aufweist.

10. Auszugsführung nach einem der vorhergehenden Ansprüche, **dadurch gekennzeichnet, dass** die Auszugsführung anstelle von Kugeln andere Wälzkörper, insbesondere zylinderförmige Wälzkörper, aufweist.

11. Gerät oder Möbel, **gekennzeichnet durch** eine oder mehrere Auszugsführungen nach einem der Ansprüche 1 bis 10.
